# EUROPEAN PATENT APPLICATION

(11) **EP 4 474 358 A1**
(43) Date of publication of application: **11.12.2024**
(21) Application number: 23305910.4
(22) Date of filing: 07.06.2023
(51) Int. Cl.: C02F 1/28, C02F 1/52, C02F 3/34, B01J 20/02, B01J 20/24, B01J 20/26, B01J 20/28, C02F 101/00, C02F 101/20, C02F 101/22, C02F 103/06, C02F 101/10

(54) **PROCESS FOR REMOVING METAL POLLUTANTS FROM A MEDIUM**

(71) Applicant: UNIVERSITE DE BORDEAUX, 33000 Bordeaux (FR); Centre National de la Recherche Scientifique, 75016 Paris (FR)
(72) Inventor: WILLIAMSON, Adam, 33290 Parempuyre (FR); SERGEANT, Claire, 33000 Bordeaux (FR)
(74) Representative: Plasseraud IP

(57) **Abstract**

The invention pertains to the field of pollution control, in particular it refers to contaminant removal and immobilization with hydrogel composite beads by carbonate precipitation of metals, metalloids, and radionuclides.

## Description

### Technical Field

The invention pertains to the field of pollution control, in particular it refers to contaminant removal and immobilization with hydrogel composite beads, in particular biologically modified hydrogel composite beads, by carbonate precipitation of metals, metalloids, and radionuclides.

### Background Art

Rapid urbanization and industrialization resulting from growing populations contribute to environmental pollution by toxic metals and radionuclides which pose a threat to the environment and to human health.

To combat this threat, it is important to develop remediation or contaminant removal technologies based on sustainable processes. In recent years, a biomineralization process involving ureolytic microorganisms that leads to calcium carbonate precipitation has been found to be effective in immobilizing toxic metal pollutants. The advantage of using ureolytic organisms for bioremediating metal pollution in soil is, in addition to having a low ecological footprint, their ability to immobilize toxic metals efficiently by precipitation or coprecipitation. Studies published to date have primarily used ureolytic bacteria, reporting certain metal(loid) removal percentages up to 100%, thus demonstrating the effectiveness of this treatment. Various genera of bacteria, particularly Grampositive, have been reported with Microbially-induced Carbonate Precipitation (MICP) abilities. More recently, fungi have been also proposed as a viable alternative for the removal of these toxic element by carbonates precipitation (Tamayo-Figueroa et al., Metal and metalloid immobilization by microbiologically induced carbonates precipitation, World Journal of Microbiology and Biotechnology, (2019) 35:58).

However, the presence of microorganisms in a product used for contaminant removal requires the use of sterile environments and bioreactors which may render the process more complex and less economical. In addition, the removed contaminants may result toxic to the microorganisms used, limiting thus the effective lifetime of the products containing said microorganisms.

On the other hand, removal of contaminants from water using hydrogel-based materials has been also described. For example, polymer and graphene hydrogels are promising new materials for removing inorganic (e.g., metals and metalloids) and organic (e.g., dyes) trace contaminants from water. For metal removal, hydrogels have been used via sorption processes. However, sorption processes can be perturbed and/or reversed by physicochemical parameters, such as pH or the presence of chelators. In general, these solutions using hydrogel-based materials are currently limited to a few-type of contaminants. Moreover, certain hydrogel-based materials (e.g. hydrogels made with alginates only) can be limited in resistance to mechanical and chemical stress.

Accordingly, there is still a need for developing processes and products for removing, in a sustainable, simple and cost-efficient manner, a wide range of inorganic contaminants, and in particular for removing metals, metalloids and radionuclides from contaminated media.

### Summary of the invention

Advantageously, the applicants have developed hydrogel composite beads containing crosslinked polymers and carbonates which are capable of removing metals, metalloids and radionuclides contaminants by precipitating those carbonates into these beads due to the low water solubility of said carbonate salts. The use of the hydrogel composite beads containing crosslinked polymers and carbonates according to the present invention represents a simple and effective process to immobilize and remove metal, metalloids and radionuclides. In addition, the removed contaminants may be recovered from the beads, which may be subsequently reused, by bringing the beads into contact with a source of carbonate, for replenishment, after one or more uses, providing, therefore, a sustainable process to remove metals, metalloids and radionuclides contaminants.

Hence, in **an embodiment**, the present invention relates to a process for removing contaminants from a medium comprising the steps of:
(i) providing hydrogel composite beads comprising crosslinked polymers and carbonate, wherein said polymers comprise two or more monomeric units containing hydroxyl groups and/or monomeric units containing carboxylate groups;
(ii) bringing into contact said hydrogel composite beads comprising crosslinked polymers and carbonate with a contaminated medium containing metals, metalloids, and radionuclides;
(iii) isolating the hydrogel composite beads from the medium.

In **another embodiment,** the present invention relates to a process for removing contaminants from a medium comprising the steps of:
(i) providing hydrogel composite beads comprising crosslinked polymers and carbonate, wherein said polymers comprise two or more monomeric units containing hydroxyl groups and/or monomeric units containing carboxylate groups;
(ii) bringing into contact said hydrogel composite beads comprising crosslinked polymers and carbonate with a contaminated medium containing metals, metalloids, and radionuclides;
(iii) isolating the hydrogel composite beads from the medium;
wherein the polymers are selected from a polyol, a polysaccharide, a polycarboxylate, or a combination thereof, preferably selected from the group consisting of poly(vinyl alcohol), alginate, chitosan, carboxymethylcellulose, and polyacrylate, or a combination thereof, more preferably poly(vinyl alcohol) and alginate; and wherein the metals, metalloids and radionuclides are selected from the group consisting of (Cu), chromium (Cr), cobalt (Co), zinc (Zn), cadmium (Cd), lead (Pb), barium (Ba), iron (Fe), calcium (Ca), magnesium (Mg), nickel (Ni), mercury (Hg), antimony (Sb), arsenic (As), tin (Sn) strontium (Sr), uranium (U), thorium (Th), americium (Am), plutonium (Pu) and radium (Ra), preferably wherein the metals, metalloids and radionuclides are selected from the group consisting of barium (Ba), lead (Pb), copper (Cu), nickel (Ni), zinc (Zn), cadmium (Cd), cobalt (Co) and strontium (Sr).

In **another embodiment,** the present invention relates to hydrogel composite beads comprising crosslinked polymers and carbonate, wherein the polymers comprise two or more monomeric units containing hydroxyl groups and/or monomeric units containing carboxylate groups, preferably said polymers are selected from a polyol, a polysaccharide, a polycarboxylate, or a combination thereof, more preferably selected from the group consisting of poly(vinyl alcohol), alginate, chitosan, carboxymethylcellulose, and polyacrylate or a combination thereof; and even more preferably are poly(vinyl alcohol) and alginate.

In **another embodiment,** the present invention concerns a process for producing a hydrogel composite bead according to the invention (or for providing the hydrogel composite beads according to the invention), comprising the steps of:
(i.a) crosslinking one or more polymers comprise two or more monomeric units containing hydroxyl groups and/or monomeric units containing carboxylate groups, preferably one or more polymers selected from a polyol, a polysaccharide, a polycarboxylate, or a combination thereof, more preferably selected from the group consisting of poly(vinyl alcohol), alginate, chitosan, carboxymethylcellulose and polyacrylate or a combination thereof, even more preferably poly(vinyl alcohol) and alginate; in the presence of a crosslinking agent to obtain hydrogel composite beads;
(i.b.) isolating the obtained hydrogel beads comprising crosslinked polymers;
(i.c.) bringing the hydrogel beads comprising crosslinked polymers in contact with a source of carbonate to obtain hydrogel composite beads comprising crosslinked polymers and carbonate;
(i.d.) isolating the hydrogel composite beads comprising crosslinked polymers and carbonate.

Finally, in **another embodiment,** the present invention relates to the use of hydrogel composite beads according to the invention for removing contaminants from a medium by removing from said medium metals, metalloids and radionuclides.

### Detailed description

In an embodiment, the present invention concerns a process for removing contaminants from a medium by removing metals, metalloids, and radionuclides, comprising bringing into contact hydrogel composite beads comprising crosslinked polymers and a carbonate according to the present invention with said medium.

Hydrogel composite beads comprising crosslinked polymers and carbonate according to the present invention allow immobilizing and removing metal, metalloid and radionuclide contaminants when brought into contact with a contaminated medium, by precipitating said metal, metalloid and radionuclide contaminants as carbonates having a low water solubility into these beads.

In one aspect of the invention, the metals and metalloids are selected from the group consisting of (Cu), chromium (Cr), cobalt (Co), zinc (Zn), cadmium (Cd), lead (Pb), barium (Ba), iron (Fe), calcium (Ca), magnesium (Mg), Nickel (Ni), mercury (Hg), antimony (Sb),arsenic (As), tin (Sn) and strontium (Sr), and radionuclides such as strontium (Sr), uranium (U), thorium (Th), americium (Am), plutonium (Pu) and radium (Ra).

In a preferred aspect of the present invention, the metals and metalloids are selected from the group consisting of barium (Ba), lead (Pb), copper (Cu), nickel (Ni), zinc (Zn), cadmium (Cd), cobalt (Co) and strontium (Sr), and the radionuclide is strontium (Sr).

### Hydrogel bead comprising crosslinked polymers.

A hydrogel bead is a three-dimensional network of crosslinked polymers.

In particular, the hydrogel beads comprising crosslinked polymers used according to the present invention are prepared by crosslinking one or more polymers comprising two or more monomeric units containing hydroxyl groups and/or monomeric units containing carboxylate groups, preferably one or more polymers selected from a polyol, a polysaccharide, a polycarboxylate, or a combination thereof, more preferably selected from the group consisting of poly(vinyl alcohol), alginate, chitosan, carboxymethylcellulose, polyacrylate or a combination thereof, in the presence of a crosslinking agent to obtain hydrogel beads comprising crosslinked polymers according to the present invention.

As defined in the present invention, the term "hydrogel beads comprising crosslinked polymers" refers to hydrogel beads, wherein said hydrogel beads are a three-dimensional network of crosslinked polymers, and wherein said polymers comprise two or more monomeric units containing hydroxyl groups and/or monomeric units containing carboxylate groups.

In an embodiment, the polymers are a polyol, a polysaccharide, a polycarboxylate, or a combination thereof, or preferably are selected from the group consisting of poly(vinyl alcohol) (PVA), alginate, chitosan, carboxymethylcellulose, polyacrylamide, or a combination thereof. In a more preferred embodiment, the hydrogel bead comprises a poly(vinyl alcohol) and an alginate.

As used herein, alginate encompasses alginic acid and its derivatives such as ester derivatives such as propylene glycol alginates, salts such as monovalent cations such as sodium, divalent or trivalent cations such as calcium or zinc. In an embodiment, the alginate is sodium alginate.

The polymers comprising two or more monomeric units containing hydroxyl groups and/or monomeric units containing carboxylate groups, can be crosslinked with any crosslinking solution known by the one skilled in the art to be appropriate for crosslinking of these polymers, or a combination of these polymers.

In an embodiment, the polymers comprising two or more monomeric units containing hydroxyl groups and/or monomeric units containing carboxylate groups are crosslinked with a crosslinking solution comprising boric acid, calcium chloride, sodium sulfate, sodium nitrate, trisodium phosphate or a combination thereof. In one preferred embodiment, the crosslinking solution comprises boric acid.

In one preferred embodiment, the hydrogel beads comprising crosslinked polymers according to the present invention comprise poly(vinyl alcohol), alginate and boric acid in a weight proportion of 10:1:5.

In an embodiment, the poly(vinyl alcohol) has a molecular weight comprised between 50,000 and 190,000 Da.

In an embodiment, the poly(vinyl alcohol) has a molecular weight comprised between 140,000 and 190,000 Da.

In another embodiment, the poly(vinyl alcohol) has a molecular weight comprised between 50,000 and 110,000 Da.

Yet in another embodiment, the poly(vinyl alcohol) has a molecular weight comprised between 80,000 and 100,000 Da.

The one skilled in the art knows method for determining molecular weight of a polymer and particularly molecular weight of poly(vinyl alcohol). Typically, gel permeation chromatography can be used for measuring molecular weight.

In another embodiment, the viscosity of the poly(vinyl alcohol) is comprised between 5 and 50 MPa.s at 25°C. Viscosity can be measured by any method known by the one skilled in the art. Typically, viscosity can be measured with a Höppler viscosimeter according to DIN 53015 norm (June 2019).

### Hydrogel composite beads comprising crosslinked polymers and carbonate

Another embodiment of the invention refers to hydrogel composite beads comprising crosslinked polymers and carbonate, wherein the polymers and crosslinking agents used to prepare said hydrogel beads are those defined and described in the present invention, in the preferred ratios described in this disclosure.

In that connection, the hydrogel composite beads comprising crosslinked polymers and carbonate are prepared by bringing into contact the hydrogel beads comprising crosslinked polymers, as defined and described in the present invention, with an aqueous solution comprising a soluble carbonate, such as ammonium carbonate, sodium carbonate and potassium carbonate. Preferred soluble carbonates are those comprising a cation which does not form stable water-soluble complexes with the metal, metalloids and radionuclides contaminants. In some embodiments the soluble carbonate is ammonium carbonate.

As defined in the present invention, the term "hydrogel composite beads comprising crosslinked polymers and carbonate" refers to hydrogel beads containing carbonate, wherein said hydrogel beads are a three-dimensional network of crosslinked polymers, and wherein said polymers comprise two or more monomeric units containing hydroxyl groups and/or monomeric units containing carboxylate groups.

In particular, in one embodiment, the hydrogel composite beads comprising crosslinked polymers and carbonate are prepared by:
(i.a) crosslinking one or more polymers comprising two or more monomeric units containing hydroxyl groups and/or monomeric units containing carboxylate groups, preferably one or more polymers selected from a polyol, a polysaccharide, a polycarboxylate, or a combination thereof, more preferably selected from the group consisting of poly(vinyl alcohol), alginate, chitosan, carboxymethylcellulose, polyacrylate or a combination thereof, in the presence of a crosslinking agent to obtain hydrogel beads comprising crosslinked polymers;
(i.b.) isolating the obtained hydrogel beads comprising crosslinked polymers;
(i.c.) bringing the hydrogel beads comprising crosslinked polymers in contact with a source of carbonate to obtain hydrogel composite beads comprising crosslinked polymers and carbonate;
(i.d.) isolating the hydrogel composite beads comprising crosslinked polymers and carbonate.

The hydrogel composite beads comprising crosslinked polymers and carbonate allow induced carbonate precipitation when brought in contact with a contaminated medium due to the low water solubility of their carbonate salts which are insoluble or sparingly soluble according to the present disclosure.

For the purposes of the present disclosure, a salt is soluble (and thus a carbonate salt is soluble) in water if it dissolves in water to give a solution with a concentration of at least 30 g per 100 mL at atmospheric pressure (1 atm.) and at room temperature (15-25°C). On the other hand, also for the purposes of the present disclosure, a salt is considered sparingly soluble in water if it dissolves in water to give a solution with a concentration of between 1g and 30g per 100 mL at atmospheric pressure (1 atm.) and at room temperature (15-25°C), whereas a salt is considered insoluble if its solubility in water is lower than 1g per 100 mL at atmospheric pressure and at room temperature (15-25°C). Thus, for the purposes of the present invention insoluble and sparingly soluble salts are also defined as salts with a low water solubility.

When these hydrogel composite beads comprising crosslinked polymers and carbonate, according to the present invention, are brought into contact with pollutants such as metals, metalloids, and radionuclides, they mediate metal precipitation through the formation of metal carbonates with a low water solubility. In one embodiment, the metals, metalloids and radionuclides are selected from the group consisting of copper (Cu), chromium (Cr), cobalt (Co), zinc (Zn), cadmium (Cd), lead (Pb), barium (Ba), iron (Fe), calcium (Ca), magnesium (Mg), nickel (Ni), mercury (Hg), antimony (Sb),arsenic (As), tin (Sn), strontium (Sr), uranium (U), thorium (Th), americium (Am), plutonium (Pu) and radium (Ra); preferably the metals metalloids and radionuclides are selected from the group consisting of barium (Ba), lead (Pb), copper (Cu), nickel (Ni), zinc (Zn), cadmium (Cd), cobalt (Co) and strontium (Sr).

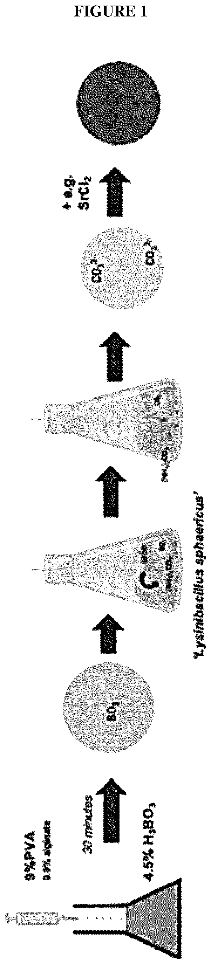

Schematic of the process of metal precipitation through the formation of metal carbonates with a low water solubility such as SrCO₃ is described in **figure 1**. Typically, the metal present in the medium will react with the carbonate present in the hydrogel composite beads of the present invention to form metal carbonate having a low water solubility. Hence precipitation occurs into (inside) the beads. Advantageously, isolation and concentration of the precipitated carbonate into the beads allows for easy recovery.

The hydrogel composite beads comprising crosslinked polymers and carbonate, as well as the hydrogel beads comprising crosslinked polymers, as defined in the present invention, can also sorb metals, metalloids and radionuclides when brought into contact with a contaminated medium.

### Metal, metalloids, and radionuclides

Metals, metalloids and radionuclides are regarded as one of the primary soil and water (ground and surface, industrial and domestic) contaminants in many countries. Important pollutants include toxic metal(loid)s such as copper (Cu), chromium (Cr), cobalt (Co), zinc (Zn), cadmium (Cd), lead (Pb), barium (Ba), iron (Fe), calcium (Ca), magnesium (Mg), Nickel (Ni), mercury (Hg), antimony (Sb), arsenic (As) and tin (Sn) and radionuclides such as strontium (Sr), uranium (U), thorium (Th), americium (Am), plutonium (Pu) and radium (Ra).

The terms metal, metalloids and radionuclides include, for the purposes of the present invention all stable and radioactive forms of the atomic elements disclosed herein. For example, when the contaminant is strontium (Sr), it will be understood that the removal of contaminants with the method of the present invention refers to the removal of any of the stable or radioactive forms of the strontium (Sr) present in the contaminated medium.

In an embodiment, metals, metalloids and radionuclides are selected from the group consisting of copper (Cu), chromium (Cr), cobalt (Co), zinc (Zn), cadmium (Cd), lead (Pb), barium (Ba), iron (Fe), calcium (Ca), magnesium (Mg), nickel (Ni), mercury (Hg), antimony (Sb),arsenic (As), tin (Sn), strontium (Sr), uranium (U), thorium (Th), americium (Am), plutonium (Pu) and radium (Ra).

Applicants demonstrate that hydrogel composite beads comprising crosslinked polymers and carbonate described in the present invention allow the removal of strontium (Sr), barium (Ba), lead (Pb), copper (Cu), nickel (Ni), zinc (Zn), cadmium (Cd) and cobalt (Co). In addition, the applicants have shown that the removal of those metal and metalloid contaminants may be carried out also with mixed metallic systems and under different conditions (pH, salinity, type of anion, presence of chelating agents, etc.)

Hence, in an embodiment, the metals, metalloids and radionuclides are selected from the group consisting of barium (Ba), lead (Pb), copper (Cu), nickel (Ni), zinc (Zn), cadmium (Cd), cobalt (Co) and strontium (Sr).

### Effluent, groundwater, and soil

### Effluent

In an embodiment, the medium is an effluent.

As used herein, the term "effluent" encompasses wastewater - treated or untreated - that flows out of a treatment plant, sewer, or industrial outfall. It also encompasses liquid waste or sewage discharged into a river or the sea.

In an embodiment, the beads according to the invention (with ureolytic-microorganisms or not) are placed into columns, bioreactors, tanks of various shapes, or any device configured to receive effluent for implementing a bioremediation process according to the invention.

Industrial scale column reactors have already been established and described in the state of the art and can be adapted for the bioremediation process according to the invention.

In an embodiment, the beads according to the invention are placed as a barrier to the incoming pollutant.

### Groundwater

In an embodiment, the medium is contaminated groundwater.

Contaminated groundwater could be treated *in situ* via an excavated engineered site, where beads according to the invention are placed as a barrier to the incoming pollutant in the groundwater.

In another embodiment, groundwater could be pumped out and treated on site using a bioreactor and then the clean water can be pumped back into the ground

### Soil

In an embodiment, the medium is a soil and encompasses any contaminated soil. When the medium is a contaminated soil, the method of the invention comprises a step of washing the soil with water and/or an aqueous acid solution (pH ≤ 5), in order to obtain an aqueous solution comprising the metal, metalloids and radionuclide contaminants.

### Process for producing hydrogel composite beads comprising crosslinked polymers and carbonate

In an embodiment, the present invention relates to process for producing hydrogel composite beads according to the invention (or for providing the hydrogel beads according to the invention), comprising the steps of:
(i.a) crosslinking one or more polymers comprising two or more monomeric units containing hydroxyl groups and/or monomeric units containing carboxylate groups, preferably one or more polymers selected from a polyol, a polysaccharide, a polycarboxylate, or a combination thereof, more preferably one or more polymers selected from the group consisting of poly(vinyl alcohol), alginate, chitosan, carboxymethylcellulose, polyacrylate or a combination thereof, in the presence of a crosslinking agent to obtain hydrogel beads comprising crosslinked polymers;
(i.b.) isolating the obtained hydrogel beads comprising crosslinked polymers;
(i.c.) bringing the hydrogel beads comprising crosslinked polymers in contact with a source of carbonate to obtain hydrogel composite beads comprising crosslinked polymers and carbonate;
(i.d.) isolating the hydrogel composite beads comprising crosslinked polymers and carbonate.

In an even more preferred embodiment, the polymers are poly(vinyl alcohol) and sodium alginate.

The one skilled in the art knows how to crosslink such polymers.

In some embodiments the polymers comprise two or more monomeric units containing hydroxyl groups and/or monomeric units containing carboxylate groups. In some preferred embodiments the polymers are selected from the group consisting of a polyol, a polysaccharide and a polycarboxylate, or a combination thereof. In a more preferred embodiment the polymers are selected from the group consisting of poly(vinyl alcohol), alginate, chitosan, carboxymethylcellulose, polyacrylate or a combination thereof. In an even more preferred embodiment, the polymers are crosslinked with crosslinking agent which comprises boric acid, calcium chloride, sodium sulfate, sodium nitrate, trisodium phosphate or a combination thereof.

In one embodiment, the source of carbonate is an aqueous solution comprising a soluble carbonate salt and step (i.c.) comprises bringing into contact the hydrogel beads comprising crosslinked polymers, as defined and described in the present invention, with an aqueous solution comprising carbonate.

In some embodiments the carbonate is generated in situ during the step of bringing into contact the hydrogel beads comprising crosslinked polymers, as defined and described in the present invention, with an aqueous solution comprising a soluble carbonate. In other embodiments the carbonate is generated previously to the step of bringing into contact the hydrogel beads comprising crosslinked polymers, as defined and described in the present invention, with an aqueous solution comprising a soluble carbonate.

The origin of the carbonate may be biogenic (i.e., carbonate generated by a microorganism or any other biological source) or any other (carbonate from mineral origin for example). In one particular embodiment, the carbonate is generated by a urease-producing organism.

Some embodiments refer to hydrogel composite beads according to the claims and the present invention, obtainable by the process described herein.

### Urease-producing organisms or ureolytic-microorganisms

Microbial urease, a type of hydrolase, is an enzyme which has been demonstrated to have an effective role in the immobilization of various metals as carbonates with a low water solubility.

Urease belongs to the hydrolase class and superfamily of amidohydrolases and phosphotriesterases with EC number 3.5.1.5. Urease hydrolyses urea to yield ammonia and carbamate, which is unstable, and spontaneously forms carbonic acid and ammonia upon further hydrolysis, which in turns forms ammonium bicarbonate and ammonium carbonate in a percentage relative to the pH (Kumari et al., Microbially-induced Carbonate Precipitation for Immobilization of Toxic Metals, Chapter in Advances in Applied Microbiology, January 2016, DOI: 10.1016/bs.aambs.2015.12.002.), forming ammonium carbonate, which is an aqueous soluble carbonate.

Hence, and as used herein, the term "urease-producing organisms" cover any organism that allow metal bioprecipitation through the formation of metal carbonates with a low water solubility. Some examples of ureolytic bacteria are described in Kumari et al. These organisms have also been described in Ignatius Ren Kai Phang et al., Isolation and Characterisation of Urease-producing Bacteria from Tropical Peat, Biocatalysis and Agricultural Biotechnology, https://doi.org/10.1016/j.bcab.2017.12.006.

Hence, in an embodiment, the urease-producing organisms are selected among *Sporosarcina ginsengisoli, Exiguobacterium, Lysinibacillus sphaericus, Terrabacter tumescens, Kocuria Flava*, *Enterobacter cloacae*, *Sporosarcina koreensis*, *Halomonas* sp., *Sporosarcina* sp., Lactobacillus sp. such as *L. fermentum, L. reuteri, L. animalis, L.salivarius, L. ruminis, L. delbrueckii,* Streptococcus sp. such as *S*. *mitior, S. salivarius, S. thermophilius*, *Arthrobacter mobilis,* Weissella sp. such as *W. cibaria, W.confusa, W. viridescens*, Enteroccocus sp. such as *E .faecalis, E. faecium, E. pseudoavium, Enterobacter sp., Providencia rettgeri,* Bacillus sp such as *B. sphaericus, B.licheniformis* and Sporosarcina pasteurii (formerly Bacillus pasteurii), *S.aquimarina, A.aerogenes, B.subtilis, B.thuringiensis, D.halophilia, H.eurihalina, H.pylori, K.flava, M. parvum, M.xanthus, P.mirabilis, P.denitrificans, Spoloactobacillus sp. And S. ginsengisoli.* In a preferred embodiment, the urease-producing organism is *Lysinibacillus sphaericus.*

### Beads

The beads according to the invention may be spherical or non-spherical. The average diameter of beads according to any of the afforded-mentioned aspect of the invention may range from micrometer to centimeter. Typically, the average diameter of beads can range from 0.01 millimeter to 1 centimeter, in particular from 1 mm to 5 mm.

In an embodiment, the invention also concerns hydrogel composite beads comprising crosslinked polymers and carbonate, wherein the polymers comprise two or more monomeric units containing hydroxyl groups and/or monomeric units containing carboxylate groups, preferably the polymers are selected from the group consisting of a polyol, a polysaccharide and a polycarboxylate, or a combination thereof, more preferably the polymers are selected from the group consisting of poly(vinyl alcohol), alginate, chitosan, carboxymethylcellulose, and polyacrylate or a combination thereof.

The origin of the carbonate may be biogenic (i.e., carbonate generated by a microorganism or any other biological source) or any other (carbonate from mineral origin for example).

In one embodiment the carbonate is non-biogenic and step (i.c.) comprises bringing the hydrogel beads comprising crosslinked polymers according to the present invention in contact with a solution containing a soluble carbonate salt. In one embodiment the carbonate is biogenic and step (i.c.) comprises bringing the hydrogel beads comprising crosslinked polymers according to the present invention in contact with a solution containing urease-producing organisms.

In an embodiment, the solution containing urease-producing organisms can contain nutrients such as nutrient required for germination and/or growth or bacteria and also urea, a suitable carbon and nitrogen source, and yeast extract media.

In a preferred embodiment, the polymers are poly(vinyl alcohol) and alginate, preferably sodium alginate, and the urease-producing organism is *Lysinibacillus sphaericus.*

Preferably, the polymers are poly(vinyl alcohol) and sodium alginate, and said polymers are crosslinked through a crosslinking solution comprising boric acid and calcium chloride.

### Process for removing contaminants from a contaminated medium

Hence, and as described previously, the applicants advantageously demonstrate that the hydrogel composite beads comprising crosslinked polymers and carbonate, according to the invention, can eliminate metals, metalloids, and radionuclides contaminants from a medium by precipitation of said contaminants as carbonates into the beads, depending on the concentration of the contaminants.

In one embodiment, said process for removing contaminants according to the present invention comprises:
(i.) providing hydrogel composite beads comprising crosslinked polymers and carbonate, wherein the polymers comprise two or more monomeric units containing hydroxyl groups and/or monomeric units containing carboxylate groups, preferably the polymers are selected from the group consisting of a polyol, a polysaccharide and a polycarboxylate, or a combination thereof, more preferably the polymers are selected from the group consisting of poly(vinyl alcohol), alginate, chitosan, carboxymethylcellulose, and polyacrylate or a combination thereof;
(ii.) bringing into contact said hydrogel composite beads comprising crosslinked polymers and carbonate with a contaminated medium containing metals, metalloids, and radionuclides;
(iii.) isolating the hydrogel composite beads comprising crosslinked polymers and carbonate from the medium.

The hydrogel composite beads comprising crosslinked polymers and carbonate are prepared by bringing into contact the hydrogel beads comprising crosslinked polymers, as defined and described in the present invention, with a source of carbonate, wherein said process comprises:
(i.a.) crosslinking one or more polymers comprising two or more monomeric units containing hydroxyl groups and/or monomeric units containing carboxylate groups, preferably one or more polymers selected from the group consisting of a polyol, a polysaccharide and a polycarboxylate, or a combination thereof, more preferably one or more polymers selected from the group consisting of poly(vinyl alcohol), alginate, chitosan, carboxymethylcellulose, polyacrylate or a combination thereof, in the presence of a crosslinking agent, to obtain hydrogel beads comprising crosslinked polymers;
(i.b.) isolating the obtained hydrogel beads comprising crosslinked polymers;
(i.c.) bringing the hydrogel beads comprising crosslinked polymers in contact with a source of carbonate to obtain hydrogel composite beads comprising crosslinked polymers and carbonate;
(i.d). isolating the hydrogel composite beads comprising crosslinked polymers and carbonate;
(ii.) bringing into contact said hydrogel composite beads comprising crosslinked polymers and carbonate with a contaminated medium containing metals, metalloids, and radionuclides;
(iii.) isolating the hydrogel composite beads comprising crosslinked polymers and carbonate from the medium.

In some embodiments the source of carbonate is biogenic or non-biogenic carbonate.

Typically, the concentration of carbonate depends on the metal concentration. When the metal carbonate formation is a 1 to 1 ratio, the beads need at least this ratio (1 mol CO₃ per mol of metal). However, when the source of carbonate is (NH₄)₂CO₃, the release of NH₄/NH₃ may partially prevent a complete carbonate precipitation by forming M(NH₃)ₙ complexes. In that connection, preferred soluble carbonates are those comprising a cation which does not form water soluble and stable complexes with the metal, metalloids and radionuclides contaminants present in the contaminated medium.

In one embodiment the amount of carbonate in the beads is between 2wt% and 4wt.% expressed as the weight of carbonate per total weight of the hydrogel composite beads comprising crosslinked polymers and carbonate described herein.

In one preferred embodiment, hydrogel composite beads comprising crosslinked polymers and carbonate described herein comprise poly(vinyl alcohol), alginate and carbonate in a weight proportion of 10:1:2 to 10:1:4.

In an embodiment of the process according to the invention, the carbonate is generated in situ and the carbonate is brought into contact with the medium and/or the beads concomitantly or subsequently with the beads comprising crosslinked polymers.

The hydrogel composite beads comprising crosslinked polymers and carbonate described in the present invention may be used by bringing in contact said beads with a medium containing the contaminants in several ways: for instance, including the beads in the medium containing the metal contaminants during a period of time (batch assay), or including the beads in a column through which the medium containing the metal contaminants passes one or more times (cycles) at a certain flow rate.

In some embodiments the contaminated medium is an aqueous medium or an aqueous solution, which may be a contaminated effluent, a contaminated groundwater or an aqueous solution obtained from (by washing) a contaminated soil.

Typically, according to the present disclosure, an elevated concentration means a concentration superior or equal to 10mM, a moderate concentration means a concentration comprised between 1mM and 10mM and a low concentration means a concentration inferior or equal to 1mM.

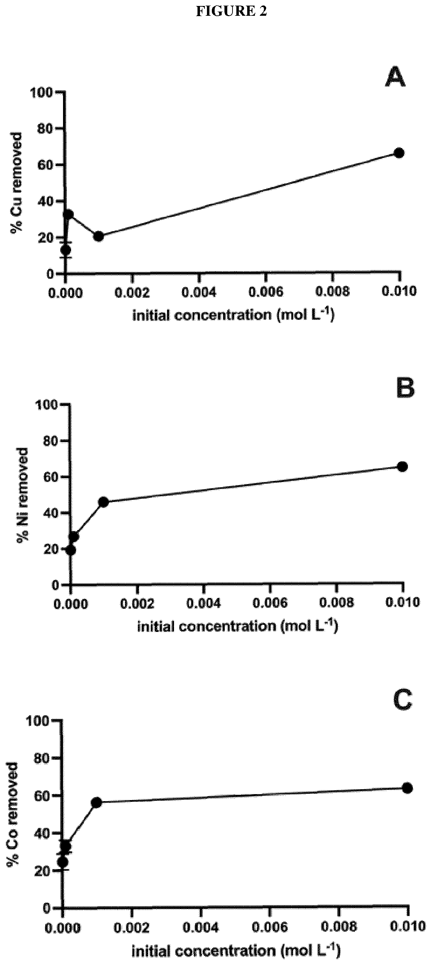

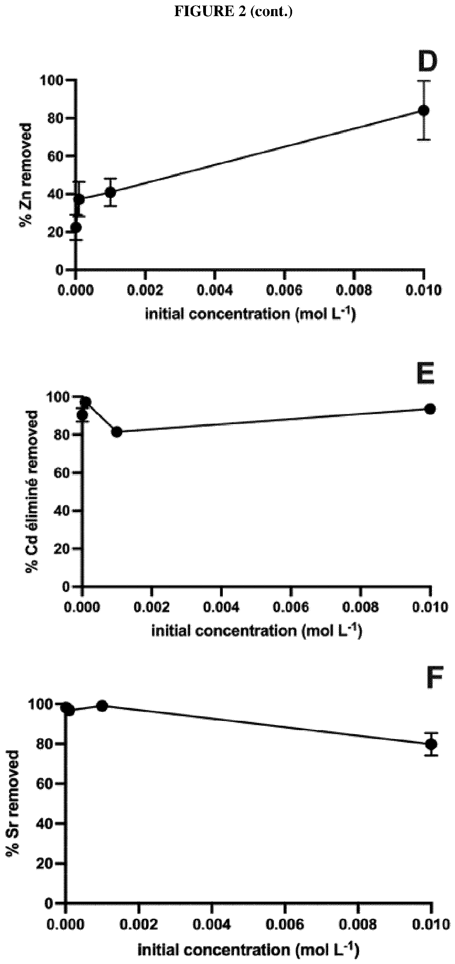

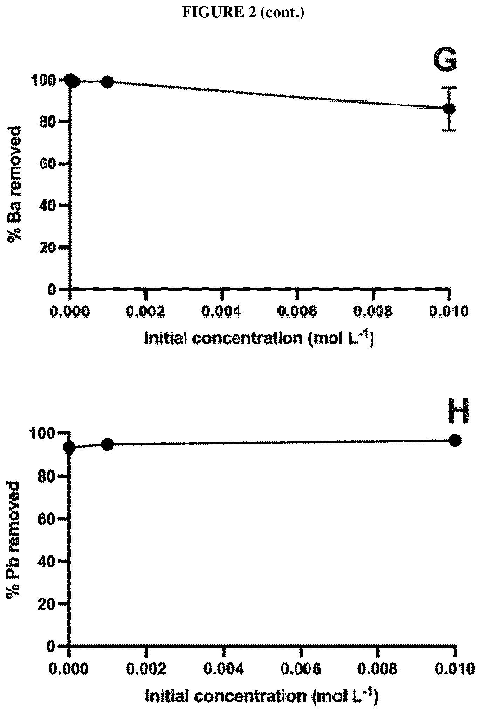

Hence, as shown in **figure 2**, in an embodiment, when the hydrogel composite beads comprising crosslinked polymers and carbonate (e.g. hydrogel composite beads comprising crosslinked PVA and alginate, and carbonate) are brought into contact with a solution containing a metal contaminant during 24 hrs. (batch process), it was possible to:
- Eliminate Cd, Sr, Ba and Pb, when said metals, metalloids and radionuclide are present in the medium at a concentration superior to or equal to 0.1 mM.
- Partially eliminate Cu, Ni, Zn and Co, wherein said metals are present in the medium at a concentration inferior to or equal to 10mM.
- Eliminate Cu, Ni, Sr, Pb, Co and Ba, wherein said metals, metalloids and radionuclide are present in the medium at a concentration superior to or equal to 10 mM.

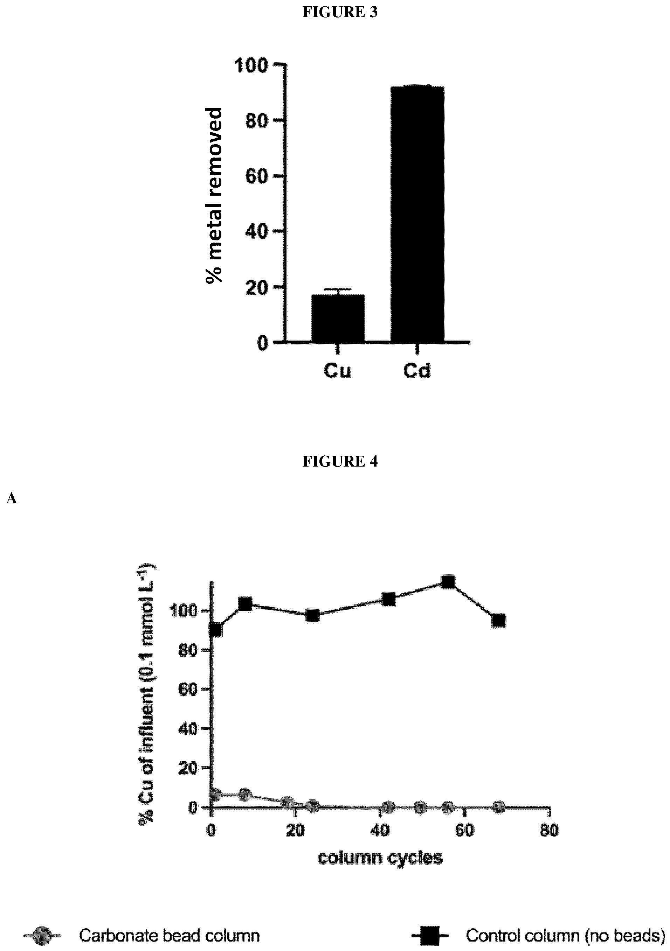

On the other hand, in order to study if the removal of the metals, metalloids and radionuclides by carbonate precipitation with the hydrogel composite beads disclosed in the present invention could be carried out also with mixed metallic systems, the beads were brought into with a solution containing Cu and Cd during 24 hr. (batch process). As shown in **figure 3**, the hydrogel composite beads comprising crosslinked polymers and carbonate (e.g. hydrogel beads comprising crosslinked PVA and alginate, and carbonate) allowed a similar removal of Cu and Cd when those metals were present alone or in combination. Accordingly, the hydrogel composite beads comprising crosslinked polymers and carbonate (preferably hydrogel composite beads comprising crosslinked PVA and alginate, and carbonate) disclosed in the present invention allow the removal of contaminants in media containing a complex mix of metals, metalloids and radionuclides.

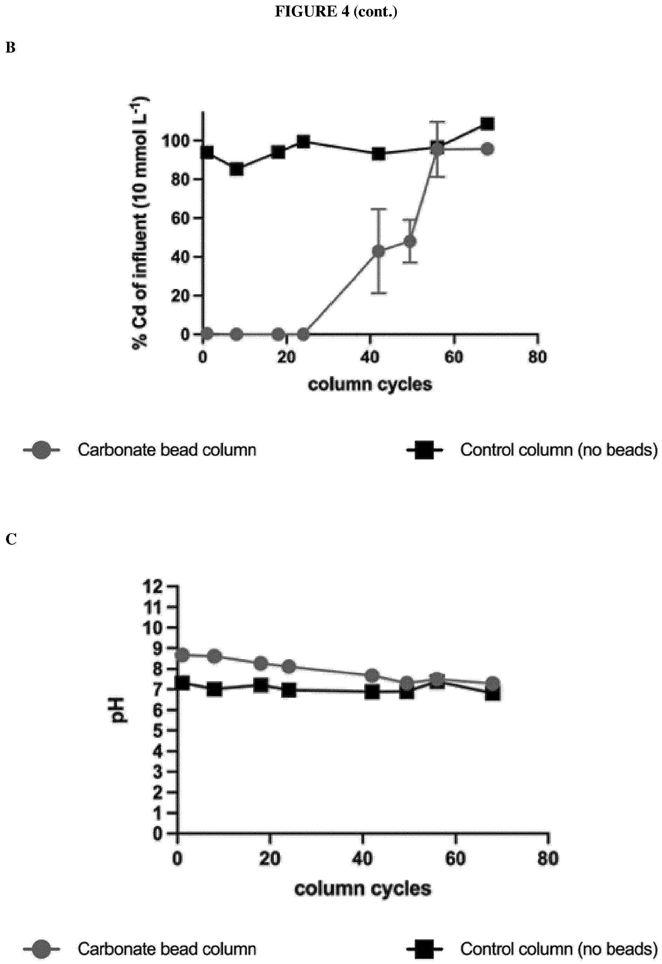

As previously indicated, the hydrogel composite beads comprising crosslinked polymers and carbonate (e.g. hydrogel composite beads comprising crosslinked PVA and alginate, and carbonate) disclosed in the present invention can be used in a batch-type process (as shown in figures 2 and 3) or in continuous process, for instance, including the beads in a column through which the medium containing the metal contaminants passes one or more times (cycles) with a certain residence time. For that purpose, as shown in figure 4, an assay in column was carried out, introducing the beads in a column through which the same effluent with a combination of Cu and Cd (results shown in figures 4A and 4B) as the one used for figure 3 for up to 70 cycles (pH 6-7 during all the assay, as shown in figure 4C). The metal removal obtained for Cu was higher in column than in the batch assay (**figure 4**).

On the other hand, as previously indicated, the removed contaminants may be recovered from the beads, which may be subsequently reused, by bringing the beads into contact with a source of carbonate after one or more uses, providing, therefore, a sustainable process to remove metals, metalloids and radionuclides contaminants.

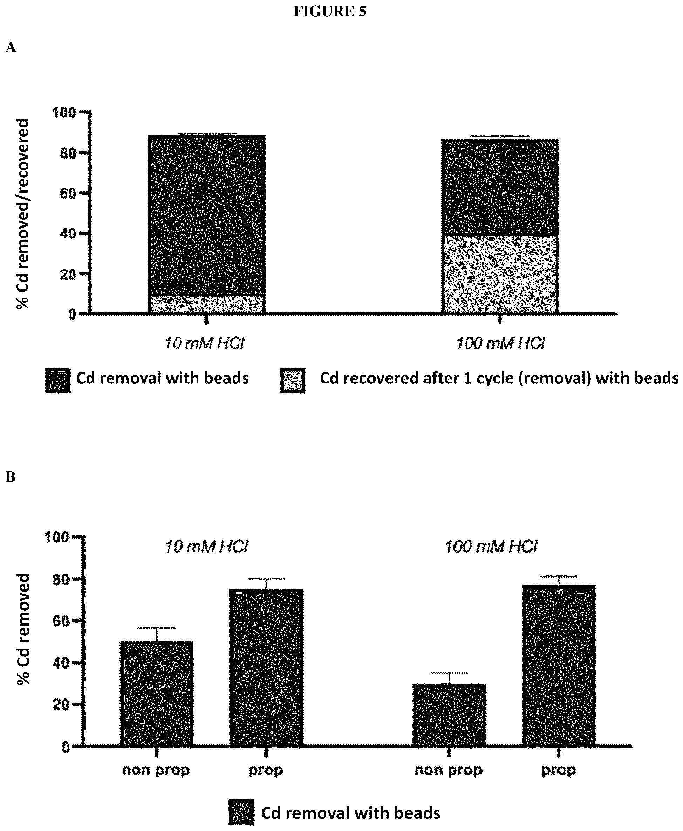

In that connection, the recovery of the metal contaminants and reusability of the beads was also shown in the examples of the present disclosure and **figure 5**. In particular, after a batch assay where Cd was immobilized (recovery yield higher than 80%), the beads were washed by submerging them with HCl at different concentrations during 24hr. The beads were subsequently used to recover Cd using the same conditions (batch assay), allowing for a lower Cd recovery yield than in the one achieved during the first use. However, if previous to the second use, the beads are brought in contact with a source of carbonate (in this case *L. sphaericus* and urea), the beads provide the same level of Cd removal as that obtained during the first use.

In an embodiment, the process for removing contaminants according to the invention comprises:
(i.) providing hydrogel composite beads comprising crosslinked polymers and carbonate, wherein the polymers comprise two or more monomeric units containing hydroxyl groups and/or monomeric units containing carboxylate groups, preferably the polymers are selected from the group consisting of a polyol, a polysaccharide and a polycarboxylate, or a combination thereof, more preferably the polymers are selected from the group consisting of poly(vinyl alcohol), alginate, chitosan, carboxymethylcellulose, and polyacrylate or a combination thereof;
(ii.) bringing into contact said hydrogel composite beads comprising crosslinked polymers and carbonate with a contaminated medium containing metals, metalloids, and radionuclides;
(iii.) isolating the hydrogel composite beads comprising crosslinked polymers and carbonate from the medium;
(iv.) recovering the contaminants from the hydrogel composite beads;
(v.) bringing the hydrogel composite beads into contact a source of carbonate;
(vi.) optionally repeating one or more of steps (ii) to (v).

In some embodiments, the contaminated medium is a contaminated aqueous solution and step (ii) comprises including the hydrogel composite beads comprising crosslinked polymers and carbonate in a solution containing metal contaminants during a period of time (batch assay). In one preferred embodiment, step (ii) comprises including hydrogel composite beads comprising crosslinked polymers and carbonate, prepared as disclosed in the present invention, in a contaminated aqueous solution, during a period of time of between 1 hr. and 48 hrs., preferably 24 hrs.

For instance, exemplary hydrogel composite beads comprising PVA and alginate in a ratio 10: 1 and 4wt% carbonate were able to remove, when brought into contact with a solution containing different metal contaminants during 24 hrs. (batch process):8.5 g Cu, 7.3 g Ni, 7.9 g Co, 12.2 g Zn, 21.7 g Cd, 14.6 g Sr 42.4 g Pb and 24.2 g Ba (amounts given per 1 kg of wet beads).

The skilled person will know the factors affecting the amounts of metal, metalloid, and radionuclide contaminant removal in a batch type of process and, in particular, factors such as the type and amounts of metal, metalloids and radionuclide contaminants present in the medium, the solubility of the carbonate salt formed, the time of contact between beads and contaminated medium, the amount of contaminated medium per amount of beads, the wt% of carbonate present in the beads, etc. In general, the amount of metal, metalloid, and radionuclide contaminant removed from a contaminated medium in a batch process may vary between 1 and 100 g per 1 kg of beads.

In other embodiments the contaminated medium is a contaminated aqueous solution and step (ii) comprises including the hydrogel composite beads comprising crosslinked polymers and carbonate in a column through which a contaminated aqueous solution containing metal contaminants passes one or more times (cycles) with a certain residence time. In one preferred embodiment, step (ii) comprises including the hydrogel composite beads comprising crosslinked polymers and carbonate in a column through which a contaminated aqueous solution containing metal contaminants passes from 2 to 200 cycles, preferably from 20 to 100 cycles with a residence time of between 15 minutes to 10 hours, preferably from 15 minutes to 5 hours, more preferably from 15 minutes to 2 hours, even more preferably between 15 minutes to 1 hour.

For instance, a 1-liter column, comprising exemplary hydrogel composite beads comprising PVA and alginate in a ratio 10: 1 and 4wt% carbonate, through which a medium containing metal contaminants passes 70 cycles at a flow rate of 80 mL/h and with a residence time of 4 hours, are able to remove 101 g.kg⁻¹ Cd and 43 g.kg⁻¹ Cu (amounts given per 1 kg of wet beads weight).

The skilled person will know the factors affecting the amounts of metal, metalloid, and radionuclide contaminant removal when the beads are used in a continuous process and, in particular, factors such as the type and amounts of metal, metalloids and radionuclide contaminants present in the medium, the solubility of the carbonate salt formed, the residence time, the flow rate, the number of cycles, the wt% of carbonate present in the beads, etc. In general, the amount of metal, metalloid, and radionuclide contaminant removed from a contaminated medium in a continuous process may vary between 1 and 200 g per 1 kg of beads, preferably between 20 and 150 g per 1 kg of beads.

In some embodiments step (iii), of isolating the hydrogel composite beads from the medium, comprises sieving and washing the hydrogel beads.

In some embodiments step (iv) comprises including the hydrogel composite beads, which comprise the carbonate precipitate of the metals, metalloids and radionuclides contaminants, in an aqueous solution containing an acid forming a water soluble salt with said metals, metalloids and radionuclides contaminants. In some embodiments said acid is citric acid, phosphoric acid, oxalic acid, maleic acid, gluconic acid or chlorohydric acid. In a preferred embodiment said acid is chlorohydric acid.

In some embodiments step (v.) comprises bringing the hydrogel composite beads into contact with a solution of biogenic or non-biogenic carbonate. In some embodiments the carbonate source is a solution of biogenic or non-biogenic ammonium carbonate ((NH₄)₂CO₃). Applicants indeed demonstrate that the addition of biogenic or-non biogenic ammonium carbonate ((NH₄)₂CO₃) allows the recovery of sorbed metals, metalloids, or radionuclides.

### Use of hydrogel composite beads for removing contaminants from a contaminated medium

In one embodiment, the present invention relates to the use of hydrogel composite beads comprising crosslinked polymers and carbonate for removing contaminants from a medium by removing from said medium metals, metalloids and radionuclides, wherein the polymers comprise two or more monomeric units containing hydroxyl groups and/or monomeric units containing carboxylate groups, preferably the polymers are selected from the group consisting of a polyol, a polysaccharide and a polycarboxylate, or a combination thereof, more preferably the polymers are selected from the group consisting of poly(vinyl alcohol), alginate, chitosan, carboxymethylcellulose, and polyacrylate or a combination thereof.

In an embodiment, metals, metalloids and radionuclides are selected from the group consisting of copper (Cu), chromium (Cr), cobalt (Co), zinc (Zn), cadmium (Cd), lead (Pb), barium (Ba), iron (Fe), calcium (Ca), magnesium (Mg), nickel (Ni), mercury (Hg), antimony (Sb), arsenic (As), tin (Sn), strontium (Sr), uranium (U), thorium (Th), americium (Am), plutonium (Pu) and radium (Ra).

In a preferred embodiment, when hydrogel composite beads comprise crosslinked polymers and carbonate, the polymers comprise two or more monomeric units containing hydroxyl groups and/or monomeric units containing carboxylate groups, preferably the polymers are selected from the group consisting of a polyol, a polysaccharide and a polycarboxylate, or a combination thereof, more preferably the polymers are selected from the group consisting of poly(vinyl alcohol), alginate, chitosan, carboxymethylcellulose, and polyacrylate or a combination thereof, and the metals, metalloids, and radionuclides are selected from the group consisting of barium (Ba), lead (Pb), copper (Cu), nickel (Ni), zinc (Zn), cadmium (Cd), cobalt (Co) and strontium (Sr).

In an embodiment, the crosslinked polymers are poly(vinyl alcohol) and alginate, preferably sodium alginate.

In this embodiment, metals and metalloids are selected from the group consisting of barium (Ba), lead (Pb), copper (Cu), nickel (Ni), zinc (Zn), cadmium (Cd), cobalt (Co) and strontium (Sr).

The invention will be further illustrated by the following figures and examples. However, these examples and figures should not be interpreted in any way as limiting the scope of the present invention.

### Brief Description of the figures

**Figure 1****:** schematic of an exemplary process of metal bioprecipitation, according to the present disclosure, through the formation of metal carbonates with a low water solubility such as SrCO₃.
**Figure 2****:** Removal of 8 different metals (Cu, Ni, Co, Zn, Cd, Sr, Ba and Pb) with exemplary hydrogel beads comprising PVA crosslinked with alginate and carbonate, according to the present invention.
The assays were conducted placing 16 beads/mL of an aqueous solution containing each of the contaminants at concentrations 0.01, 0.1, 1 and 10 mM during 24 hrs.
**Figure 3****:** Removal of Cu and Cd with exemplary hydrogel beads comprising PVA crosslinked with alginate and carbonate, according to the present invention. The assays were conducted placing 16 beads/mL of an aqueous solution containing 0.1mM Cu and 10 mM Cd.
**Figure 4****:** Cu and Cd detection in effluents from a 1 L column containing exemplary hydrogel beads comprising PVA crosslinked with alginate and carbonate, according to the present invention. An aqueous solution containing 0.1mM Cu (Fig. 4A) and 10 mM Cd (Fig. 4B) was passed through the column (flow rate 80 mL/h with a residence time of 4 hours) and detection was measured after 70 cycles (number of cycles= number of times that the aqueous solution passed through the column). Fig. 4C shows the pH value during the test.
**Figure 5****:** Removal of Cd (10 mM solution) with exemplary hydrogel beads comprising PVA crosslinked with alginate and carbonate, according to the present invention (16 beads/mL of contaminant solution, 24 hrs. contact time). Cd was then recovered with a solution containing 10 or 100 mM HCl (16 beads/mL of contaminant solution, 24 hrs. contact time). (**5A**) Cd removal (black) with the hydrogel beads after a 24 hrs contact time and recovery (grey) using a solution of 10 mM or 100 mM HCl; (**5B**) Cd removal after a second assay using the same beads after Cd recovery (non prop) or using the same beads after Cd recovery and replenishing the beads with carbonate by contact with *L. sphaericus* + 0.2 M urea (prop).

### Examples

For all experiments outlined in the following examples, experiments were typically performed at a scale of 2 ml - 20 ml in 10 ml or 50 ml Falcon tubes, as well as in a 1 liter column.

### Example 1: Removal of metal contaminants from an aqueous effluent

### 1.1. Preparation of the hydrogel beads comprising crosslinked PVA and alginate, and carbonate, according to the present invention.

### a. Preparation of hydrogel beads comprising PVA and alginate:

A solution of 9% PVA (Kuraray Poval^{®} 15-99, MW 80,000-100,000, 99+ % hydrolysed) and 0.9 % sodium alginate matrix (Sigma, Steinheim, Germany), were mixed dropwise into 5 % boric acid (Reidel de Haën, Seeize, Germany) and 2wt% CaCl₂ (Prolabo, Paris, France) (30 minutes) for PVA and alginate crosslinking, respectively.

Beads were then washed with water before transferring into experimental flasks.

### b. Culturing and batch experiments with L. sphaericus.

*Lysinibacillus sphaericus* LMG22257 (Belgian coordinated collection of microorganisms, Ghent) was grown aerobically in Erlenmeyer flasks from glycerol stocks at 30 °C. Flasks were supplied with 10 g L-1 BactoTM yeast extract (BD, Sparks, MD, USA) and 0.2 M urea (Sigma, Steinheim, Germany) to provide optimal growth conditions (defined as rich UYE media throughout).

A cell suspension (to give a final optical density representing 2 × 10⁸- 2 × 10⁹ cells) was transferred from the starting culture to fresh UYE in the presence of borate beads and left for 24-48h for incorporation of the ammonium carbonate generated by the *L. sphaericus* cell suspension within the hydrogel beads.

The beads where subsequently isolated and washed to remove the microorganisms.

The procedure to obtain the hydrogel composite beads comprising crosslinked polymers and carbonate according to this example is schematically described in **figure 1**.

### 1.2. Removal of Cu, Ni, Co, Zn, Cd, Sr, Ba and Pb with hydrogel composite beads comprising crosslinked PVA and alginate, and carbonate, according to the present invention - batch process

The assays were conducted placing 16 beads/mL in an aqueous solution containing each of the contaminants at concentrations 0.01, 0.1, 1 and 10 mM during 24 hrs.

The results shown in **figure 2** indicate that the hydrogel beads comprising PVA crosslinked with alginate and carbonate are able to remove (by precipitation of the metal carbonate into the beads) Cu, Ni, Co, Zn, Cd, Sr, Ba and Pb. In particular, the removal capacity of the beads increased from about 20 to 60% (weight of the metal removed / total weight of the metal present in solution) in the case of Cu, Ni, Co and Zn by increasing the initial concentration of the metal in the solution from 0.01 to 10 mM. However, the removal capacity of the beads was almost complete for Cd, Sr, Ba and Pb.

### 1.3. Removal of Cu and Cd with hydrogel composite beads comprising crosslinked PVA and alginate, and carbonate, according to the present invention - batch process

In order to assess if contaminant removal could also be conducted in complex systems where more than one metal contaminant is present, assays were conducted placing 16 beads/mL of an aqueous solution containing 0.1mM Cu and 10 mM Cd during 24 hrs.

As shown in figure 3, a similar Cu and Cd removal is seen in this assay to that found in the previous one carried out with solutions comprising only one of the metals.

### 1.4. Cu and Cd removal with hydrogel beads comprising PVA crosslinked with alginate and carbonate, according to the present invention - continuous process

A continuous process assay (continuous movement of metal bearing influent through a stationary - bead column- phase) was carried out placing the beads in a 1 L column. An aqueous solution containing 0.1mM Cu and 10 mM Cd was passed through the column (flow rate 60 m/h with a residence time of 4 hours) and detection was measured after several cycles and up to 70 cycles (number of cycles= number of times that the aqueous solution passed through the column).

As seen in figure 4, Cu removal was significantly higher using a column than when the beads where placed in a solution (batch process as in examples 1.2 and 1.3): the local bead-ammonia environment is washed and depleted (low mM levels of ammonia seen in effluent over the first 20 cycles), preventing soluble metal-NH₃ complex formation and allowing the copper carbonate precipitation to occur. Thus, the complete elimination of Cu (fig. 4A) was observed after 70 cycles, whereas column saturation with Cd (fig. 4B) was reached only after 40-60 cycles. pH remained relatively unchanged during the assay (pH 6-7, figure 4C).

### Example 2: Reusability of the hydrogel composite beads comprising crosslinked polymers and carbonate

To demonstrate metal recovery and reusability of the composite beads, a series of experiments with the composite beads comprising crosslinked polymers and carbonate obtained in example 1 were performed, by placing those in contact with 10 mM Cd in the same conditions as those used in the experiment 1.2 (dark gray bar, **figure 5A**).

In this case, after 24 h, the composite beads were placed in contact with a 10 mM or 100 mM HCl solution for 24 h and then the presence of Cd in aqueous solution was measured (light gray bar, **figure 5A**). In this case, 100 mM HCl was more effective in recovering Cd from the composite beads.

However, when reusing the same composite beads ("non prop" in **figure 5B**) in contact with a new 10 mM Cd solution, the composite beads that were treated with 100 mM HCl were less efficient at removing Cd. Therefore, a trade-off between Cd recovery and reuse of the composite beads for further removal must be found.

This problem can be overcome by placing the composite beads in contact with a source of carbonate again. To that end, the composite beads were placed in contact once again (i.e., propagated) with *L*. *sphaericus* bacteria and 0.2M urea again ("prop" in **figure 5B**), which then allowed for almost complete removal of 10 mM Cd in the second Cd removal experiment.

## Claims

1. A process for removing contaminants from a medium comprising the steps of:
(i) providing hydrogel composite beads comprising crosslinked polymers and carbonate, wherein said polymers comprise two or more monomeric units containing hydroxyl groups and/or monomeric units containing carboxylate groups;
(ii.) bringing into contact said hydrogel composite beads comprising crosslinked polymers and carbonate with a contaminated medium containing metals, metalloids, and radionuclides;
(iii.) isolating the hydrogel composite beads comprising crosslinked polymers and carbonate from the medium;

2. The process according to claim 1, wherein the polymers are selected from the group consisting of a polyol, a polysaccharide and a polycarboxylate, or a combination thereof, preferably the polymers are selected from the group consisting of poly(vinyl alcohol), alginate, chitosan, carboxymethylcellulose, polyacrylate, or a combination thereof.

3. The process according to any of claims 1 or 2, wherein the hydrogel composite beads comprise crosslinked poly(vinyl alcohol) and alginate, and carbonate.

4. The process according to any of claims 1 to 3, wherein the metals, metalloids and radionuclides are selected from the group consisting of (Cu), chromium (Cr), cobalt (Co), zinc (Zn), cadmium (Cd), lead (Pb), barium (Ba), iron (Fe), calcium (Ca), magnesium (Mg), nickel (Ni), mercury (Hg), antimony (Sb), arsenic (As), tin (Sn), strontium (Sr), uranium (U), thorium (Th), americium (Am), plutonium (Pu) and radium (Ra).

5. The process according to any of claims 1 to 4, wherein the metals, metalloids and radionuclides are selected from the group consisting of barium (Ba), lead (Pb), copper (Cu), nickel (Ni), zinc (Zn), cadmium (Cd), cobalt (Co) and strontium (Sr).

6. The process according to any of claims 1 to 5 further comprising the steps of:
(iv.) recovering the contaminants from the hydrogel composite beads;
(v.) bringing the hydrogel composite beads into contact with a solution of a soluble carbonate;
(vi.) optionally repeating one or more of steps (ii) to (v).

7. The process according to claim 6, wherein the source of carbonate is a urease-producing organism selected from the group consisting of *Sporosarcina ginsengisoli, Exiguobacterium, Lysinibacillus sphaericus, Terrabacter tumescens, Kocuria Flava, Enterobacter cloacae, Sporosarcina koreensis, Halomonas* sp., *Sporosarcina* sp, *Lactobacillus sp.* such as *L. fermentum, L. reuteri, L. animalis, L.salivarius, L. ruminis, L. delbrueckii, Streptococcus sp.* such as *S*. *mitior, S. salivarius, S. thermophilius, Arthrobacter mobilis, Weissella sp.* such as *W. cibaria, W.confusa, W. viridescens, Enteroccocus sp.* such as *E .faecalis, E. faecium, E. pseudoavium, Enterobacter sp., Providencia rettgeri, Bacillus sp* such as *B. sphaericus, B.licheniformis* and Sporosarcina pasteurii (formerly *Bacillus pasteurii*), *S.aquimarina, A.aerogenes, B.subtilis, B.thuringiensis, D.halophilia, H.eurihalina, H.pylori, K.flava, M. parvum, M.xanthus, P.mirabilis, P.denitrificans, Spoloactobacillus sp. and S. ginsengisoli.*

8. The process according to claim 7, wherein the urease-producing organism is *Lysinibacillus sphaericus.*

9. The process according to claim 6, wherein the source of carbonate is an aqueous solution of ammonium carbonate.

10. The process according to anyone of claims 1 to 9, wherein the medium is an effluent, a soil or a groundwater.

11. A hydrogel composite bead comprising crosslinked polymers and a carbonate, wherein the polymers comprise two or more monomeric units containing hydroxyl groups and/or monomeric units containing carboxylate groups, preferably the polymers are selected from the group consisting of a polyol, a polysaccharide and a polycarboxylate, or a combination thereof, more preferably the polymers are selected from the group consisting of poly(vinyl alcohol), alginate, chitosan, carboxymethylcellulose, polyacrylate or a combination thereof.

12. The hydrogel bead according to claim 11, wherein the crosslinked polymers are poly(vinyl alcohol) and alginate.

13. A process for producing a hydrogel composite bead according to any of claims 11 or 12 comprising the steps of:
(i.a.) crosslinking one or more polymers comprising two or more monomeric units containing hydroxyl groups and/or monomeric units containing carboxylate groups, preferably one or more polymers selected from the group consisting of a polyol, a polysaccharide and a polycarboxylate, or a combination thereof, more preferably one or more polymers selected from the group consisting of poly(vinyl alcohol), alginate, chitosan, carboxymethylcellulose, polyacrylate or a combination thereof, in the presence of boric acid to obtain hydrogel beads comprising crosslinked polymers;
(i.b.) isolating the obtained hydrogel beads comprising crosslinked polymers;
(i.c.) bringing the hydrogel beads comprising crosslinked polymers in contact with a source of carbonate to obtain hydrogel composite beads comprising crosslinked polymers and carbonate;
(i.d.) isolating the hydrogel composite beads comprising crosslinked polymers and carbonate.

14. Use of a hydrogel composite bead according to any of claims 11 or 12 for removing contaminants from a medium by removing from said medium metals, metalloids and radionuclides.

15. The use according to claim 14, wherein the metals, metalloids and radionuclides are selected from the group consisting of (Cu), chromium (Cr), cobalt (Co), zinc (Zn), cadmium (Cd), lead (Pb), barium (Ba), iron (Fe), calcium (Ca), magnesium (Mg), nickel (Ni), mercury (Hg), antimony (Sb), arsenic (As), tin (Sn), strontium (Sr), uranium (U), thorium (Th), americium (Am), plutonium (Pu) and radium (Ra).
